Europäisches Patentamt

European Patent Office

Office européen des brevets

(19)

(11) Veröffentlichungsnummer : **0 389 789 B1**

# (12) EUROPÄISCHE PATENTSCHRIFT

(45) Veröffentlichungstag der Patentschrift :
**06.05.92 Patentblatt 92/19**

(21) Anmeldenummer : **90103301.9**

(22) Anmeldetag : **21.02.90**

(30) Priorität : **31.03.89 DE 3910389**

(43) Veröffentlichungstag der Anmeldung :
**03.10.90 Patentblatt 90/40**

(45) Bekanntmachung des Hinweises auf die
Patenterteilung :
**06.05.92 Patentblatt 92/19**

(84) Benannte Vertragsstaaten :
**AT BE CH DK ES FR GB GR IT LI LU NL SE**

(56) Entgegenhaltungen :
**EP-A- 0 293 515**
**DE-A- 2 142 540**
**US-A- 2 929 504**

(51) Int. Cl.⁵ : **E03F 5/14**

(54) **Vorrichtung zum Entfernen von Rechen- und/oder Siebgut aus in einem Gerinne strömender Flüssigkeit.**

(73) Patentinhaber : **Huber, Hans-Georg**
**Zum Rachental 8**
**W-8434 Berching (DE)**

(72) Erfinder : **Huber, Hans-Georg**
**Zum Rachental 8**
**W-8434 Berching (DE)**

(74) Vertreter : **Rehberg, Elmar, Dipl.-Ing.**
**Postfach 3162 Am Kirschberge 22**
**W-3400 Göttingen (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Vorrichtung zum Entfernen von Rechen und/oder Siebgut aus in einem Gerinne strömender Flüssigkeit mit einem in das Gerinne reichenden, schräg aufwärts gerichteten, teilweise in die Flüssigkeit eintauchenden zylindermantelförmigen Rost mit Durchtrittsspalten und mit einer parallel und mit Spiel zum Rost angeordneten, als Schneckenfördereinrichtung mit einem Gehäuse, einer Welle und einer Förderwendel ausgebildeten Förderstrecke für das Gut, so daß die Förderwendel an dem Rost entlangstreichend das Gut abnimmt und nach oben fördert.

Eine derartige Vorrichtung kann für verschiedenartiges Rechen- und/oder Siebgut eingesetzt werden, beispielsweise im Bereich der Klärtechnik, aber auch dort, wo beispielsweise Kunststoffabfälle aus Flüssigkeiten herausgeholt werden müssen. Die Anwendung zielt immer auf die Trennung von weitgehend festem Rechen- und/oder Siebgut und einer Flüssigkeit ab.

Eine Vorrichtung der eingangs beschriebenen Art ist aus der DE-A-37 16 434 bekannt. Diese Vorrichtung besteht im wesentlichen aus einer Schneckenfördereinrichtung mit Gehäuse, Welle und Förderwendel, wodurch eine Förderstrecke gebildet ist. Die Welle mit der Förderwendel wird über einen Motor angetrieben. Das Gehäuse der Schneckenfördereinrichtung ist im unteren Bereich, der in den Flüssigkeitsspiegel eintaucht, zumindest teilweise durch den Rost ersetzt. Der Rost besteht aus über die Rosthöhe durchgehenden Roststäben, die in axialer Richtung, also parallel zur Achse der Welle der Schneckenfördereinrichtung angeordnet sind und auf einem zylindrischen Umfang verlaufen. Zwischen den Roststäben sind damit sich parallel zur Achse der Schneckenfördereinrichtung und damit der Vorrichtung erstreckende Durchtrittsspalte gebildet, durch die die Flüssigkeit hindurchtritt, während das Rechengut ab einer gewissen Größe an einem solchen Durchtritt gehindert ist. Die Förderwendel streicht an den Durchtrittsspalten des Rosts entlang und nimmt das Rechengut in Förderrichtung mit. Die Roststäbe weisen etwa dreieckigen oder trapezförmigen Querschnitt mit abgerundeten Kanten auf und sind so angeordnet, daß eine Dreiecks- bzw. Trapezseite des Querschnitts tangential zur Umlaufrichtung der Förderwendel zeigt, so daß sich eine engste Stelle der Durchtrittsspalte auf möglichst kleinem Radius und daran anschließend ein sich überproportional erweiternder freier Querschnitt der Durchtrittsspalte in Strömungsrichtung der Flüssigkeit ergibt. Die die Durchtrittsspalte bildenden Roststäbe sind außen durch Abstützstäbe untereinander verbunden. Die Durchtrittsspalte weisen eine relativ große Erstreckung in axialer Richtung auf und gehen praktisch über den gesamten Rost durch, auch wenn sie in Abständen außen von Abstützstäben gehalten sind.

Wenn solche Vorrichtungen beispielsweise in der Abwassertechnik eingesetzt werden, läßt es sich nicht vermeiden, daß die Vorrichtung nicht nur von dem eigentlichen Rechengut beaufschlagt wird, sondern im Gerinne auch Steine und insbesondere Split, wie er zum Abstreuen vereister Straßen im Winter benutzt wird, in den Bereich der Förderwendel und der Durchtrittsspalte gerät. Solcher Split ist scharfkantig ausgebildet. Er belastet die Vorrichtung in mehrfacher Weise. Zum einen erbringt der Split eine beachtliche aggressive Wirkung, durch die das Material des Rosts einem starken Verschleiß unterliegt. Hand in Hand damit geht eine Verformung der durchgehenden Roststäbe, weil der Split zwischen der Förderwendel und den Roststäben im Durchtrittsspalt eingeklemmt wird. Es entstehen dann beachtliche Kräfte, die von der Förderwendel über den eingeklemmten Stein auf die die Durchtrittsspalte bildenden Roststäbe ausgeübt werden. Diese führen einerseits zu einer Zertrümmerung der Steine, was nicht Sinn einer Vorrichtung zum Entfernen von Rechengut aus einem Gerinne ist, aber an sich noch inkauf genommen werden könnte. Weit nachteiliger ist es, daß durch diesen überhöhten Kraftangriff die Roststäbe durchgebogen werden, und zwar in tangentialer Richtung. Hierdurch verändert sich die Spaltweite und es kommt schließlich dazu, daß die Roststäbe von den Abstützstäben getrennt werden, zerrissen werden und dann von der Förderwendel abgeschert werden. So ist beobachtet worden, daß bei einer Vorrichtung der eingangs genannten Art ein in einer Kläranlage eingesetzter Rost, der mit Split beaufschlagt wurde, innerhalb von zwei Betriebstagen völlig zerstört war. Ein weiterer Nachteil der Vorrichtung mit dem bekannten Rost ist eine ungenügende Selbstreinigung. Durch den seitlichen Kraftangriff zwischen Förderwendel und Rechengut, der schräg zur Längsrichtung der Durchtrittsspalte erfolgt, besteht die Neigung, daß das Rechengut immer wieder in den Spalt hineingepreßt wird. Die Durchtrittsspalte wachsen somit mehr und mehr zu, so daß die Flüssigkeit am Durchtritt gehindert ist. Ein Ansteigen der Flüssigkeitsspiegel zeigt die nachteilige Wirkung an.

Der Erfindung liegt die Aufgabe zugrunde, eine Vorrichtung der eingangs beschriebenen Art dahingehend zu verbessern, daß die Belastung der die Durchtrittsspalte bildenden Wandung des Rosts beim Auftreten von harten Gegenstände, insbesondere Split, erheblich reduziert ist, so daß selbst bei ungünstigen Rechengutgemischen längere Betriebszeiten ermöglicht werden.

Erfindungsgemäß wird dies dadurch erreicht, daß die Durchtrittsspalte mit ihrer Längsrichtung so schräg geneigt zur Achse des zylindermantelförmigen Rosts angeordnet sind, daß sie sich etwa parallel zur Wirkrichtung der von der Förderwendel auf das Gut ausgeübten Gesamtkraft erstrecken. Die Durchtrittsspalte verlaufen

EP 0 389 789 B1

nicht mehr parallel zur Achse der Schneckenfördereinrichtung, sondern schräg dazu in einem bestimmten Winkel. Dieser Winkel wird durch die Wirkrichtung der Gesamtkraft, die die Förderwendel auf das Rechengut ausübt, festgelegt, wobei es auf die exakte Einhaltung dieses Winkels nicht so sehr ankommt; es genügt bereits, diesen Winkel in etwa zu verwirklichen, damit ein von der Förderwendel erfaßter Stein die Durchtrittsspalte des Rosts nicht quer zu ihrer Längserstreckung, sondern nur parallel zu ihrer Längserstreckung, belasten kann. Der Stein wird also durch die Förderwendel im Längsspalt entlanggeschoben, wobei der Längsspalt der Förderrichtung des Steins keinen übermäßigen Widerstand entgegensetzt. Erst am Ende des Längsspalts trifft der Stein dann auf einen Wandungsbereich, der sich quer zu seiner Förderrichtung erstreckt. In diesem Bereich ist jedoch die Stützweite sehr viel geringer. Überraschenderweise tritt während der Förderbewegung eines Steins in Längsrichtung der Durchtrittsspalte ein erhöhter Selbstreinigungseffekt auf, der Stein schabt den Durchtrittsspalt bei seiner Entlangbewegung sauber. Die Gefahr der Belegung und des Zuwachsens ist damit gemindert. Zu berücksichtigen ist dabei auch die schräge Anordnung der Achse der Vorrichtung im Gerinne. Strenggenommen ergibt sich diese Kraftwirkrichtung der Gesamtkraft nur im unteren Bereich des Umfangs des Rosts, also dort, wo die Gewichtskraft des Steins kein Verrollen nach der Seite hin verursacht. Wird der Stein in dem Durchtrittsspalt, der sich an der Wandung des Rosts seitlich aufwärts erstreckt, hochgehoben, dann hat der Stein wiederum die Tendenz, nach Mitnahme über einen bestimmten Winkel innerhalb des Rosts herabzufallen, bis er wieder erneut mit der Förderwendel in Kontakt kommt. Aus fertigungstechnischen Gründen ist es jedoch unumgänglich, diesen schrägen Winkel, in dem die Durchtrittsspalte angeordnet sind, zumindest über einen Teil des Umfangs des Gehäuses, welches den Rost bilden, aufrechtzuerhalten. Der für die Erfindung wesentliche Winkel der Schräglage der Wirkrichtung der Gesamtkraft wird zweckmäßig am unteren Durchgangspunkt des zylinderförmigen Gehäuses bestimmt, an dem die Förderwendel, die selbst schräg zur Achse der Fördereinrichtung angeordnet ist, entlangstreicht. Natürlich ist der Winkel der Wirkrichtung der Gesamtkraft der Förderwendel auf das Rechengut von verschiedenen Faktoren abhängig, so von der Art des Guts, insbesondere von der Reibung zwischen Rechengut und Rost. Auch die Schräglage der Förderwendel ist von Einfluß. Eine schräg angeordnete Förderwendel muß im wesentlichen zwei Kräfte auf das Rechengut ausüben, die sich vektoriell zu der angegebenen Gesamtkraft addieren. Die eine Kraft ist tangential in Umfangsrichtung des zylindermantelförmigen Rosts gerichtet und wird benötigt, um die Reibung zu überwinden, die das Gehäuse bzw. der Rost auf das Rechengut ausübt. Die andere Kraft steht senkrecht auf der Förderwendel und ist bestimmend für den Förderweg des Rechenguts, stellt also den Förderanteil dar. Für verschiedene Rechengutkombinationen läßt sich die Wirkrichtung der Gesamtkraft experimentell feststellen, um damit die Schräglage festzulegen, in der sich die Durchtrittsspalte mit ihrer Längserstreckung erstrecken.

Die Durchtrittsspalte sind an ihren in Wirkrichtung der Gesamtkraft weisenden Enden vorteilhaft mit Scherleisten versehen, die Schneidkanten aufweisen. Damit ist es möglich, faserförmiges Material wie Papier, Textilien o. dgl. an den Schneidkanten durchzutrennen, um damit einer Zopfbildung entgegenzuwirken. Durch den Selbstreinigungseffekt beim Auftreten von hartem Rechengut, insbesondere Split, werden die Durchtrittsspalte immer wieder gesäubert.

Die Durchtrittsspalte können in Wirkrichtung der Gesamtkraft zweckmäßig eine Erstreckung L aufweisen, die etwa dem fünf- bis dreißigfachen der Spaltweite s entspricht. Mit anderen Worten verhält sich die Erstreckung L zu der Spaltweite s etwa im Bereich

$$L \approx 5 \ldots 30 \cdot s.$$

Es ist durchaus sinnvoll, die Durchtrittsspalte nicht mit übermäßiger Länge auszubilden, damit der Rost in sich eine wesentlich höhere Festigkeit erhält, als wenn die Durchtrittsspalte z. B. bei ihrer axialen Ausbildung über die Gesamtlänge des Rosts durchgehend vorgesehen wären. Eine solche Erstreckung L in Längsrichtung der Durchtrittsspalte erstreckt sich schon bereits über einen gewissen Winkel in Umfangsrichtung, über den sich die Einwirkung der Gewichtskraft auf das Rechengut ändert. Dies führt dazu, daß härteres Rechengut, beispielsweise kleine Steine, bei der seitlichen Aufwärtsbewegung in einem Durchtrittsspalt in Längsrichtung aus diesem herauskippt und damit völlig in den Umfang des Innenraums des Rosts zurücktritt. Hierauf ist es auch zurückzuführen, daß die Enden der Durchtrittsspalte vergleichsweise wenig belastet werden und die Zerkleinerungswirkung auf kleine Steine weit weniger ausgeprägt ist als im Stand der Technik.

Die Durchtrittsspalte können einen sich in Durchtrittsrichtung erweiternden Querschnitt aufweisen, damit solches Rechengut bzw. Steine, die die Spaltweite s unterschreiten, sich nicht in den Durchtrittsspalt festhängen können, sondern zusammen mit der durchströmenden Flüssigkeit abgeführt werden.

Die Durchtrittsspalte und die Scherleisten mit den Schneidkanten können zweckmäßig durch Fräsen einer den Rost bildenden Platte, insbesondere einer ebenen und nach dem Fräsen zylindermantelförmig gebogenen Platte hergestellt werden. Dabei wird ein Scheibenfräser eingesetzt, dessen Achse quer zur Erstreckungsrichtung der Durchtrittsspalte in Längsrichtung angeordnet ist. Damit wird nicht nur der Durchtrittsspalt selbst geschaffen, sondern gleichzeitig auch die Scherleiste mit ihren Schneidkanten in einem Arbeitsgang hergestellt. Das Fräsen kann an einer ebenen Platte durchgeführt werden, die dann durch einen Biegevorgang zylin-

3

dermantelförmig verformt wird. Umständlicher, aber nicht unmöglich wäre ein Fräsvorgang an einer bereits zylindermantelförmig verformten Platte zur Schaffung der Durchtrittsspalte. Die Anordnung der Scherleisten erbringt eine ganz andere Festigkeit als die im Stand der Technik bekannte Verwendung von Roststäben mit dreieckigem Querschnitt mit abgerundeten Kanten, die dann durch einen Schweißvorgang zusammengefügt werden.

Der den Rost bildende Teil des Gehäuses kann auswechselbar angeordnet sein, so daß der Rost leicht austauschbar ist. Es ist sogar möglich, Roste mit verschiedener Schräglage der Haupterstreckungsrichtung der Durchtrittsspalte gegeneinander probeweise auszuprobieren, um die beste Anpassung an das jeweilige Fördergut zu finden.

Der Winkel der Gesamtkraft der Förderwendel auf das Rechengut und damit der Winkel $\beta$, den die Längserstreckung der Durchtrittsspalte zu einer Ebene senkrecht zu der Achse der Schneckenfördereinrichtung einnimmt, ist von vielen Faktoren abhängig. Wesentlich ist die Reibung zwischen Rechengut und Gehäuse, die überwunden werden muß. Generell kann man sagen, daß der Winkel $\beta$ zwischen 25 und 60° liegt, wobei der Winkel $\alpha$, den die Förderwendel zu einer gleichen Ebene einnimmt, ca. zwischen 10 und 30° liegt. Für den Winkel $\beta$ können folgende Richtwerte genannt werden, die im einzelnen experimentell genauer festlegbar sind:

```
Siebung von Klärschlamm                    β ≈ 30 bis 45°

Siebung von kommunalem

Abwasser                                   β ≈ 35 bis 60°

Siebung von Prozeßwassern,

z. B. Entnahme von Polymeren


in der chemischen Industrie               β ≈ 25 bis 50°

Siebung von Schlachthofab-

wässern                                    β ≈ 30 bis 50°
```

Ein Ausführungsbeispiel nach der Erfindung wird anhand der Zeichnung weiter dargestellt und beschrieben. Es zeigen:

Figur 1 eine schematisierte, perspektivische Darstellung der Vorrichtung in Gesamtübersicht,

Figur 2 eine Skizze zur Verdeutlichung der auf ein Rechengut einwirkenden Kräfte im unteren Bereich einer Förderstrecke,

Figur 3 einen zu Figur 2 gehörenden Schnitt gemäß der Linie III-III in Figur 2,

Figur 4 die Darstellung eines Ausschnitts aus dem Rost,

Figur 5 einen Schnitt gemäß der Linie V-V in Figur 4, jedoch im unteren Umfangsbereich und

Figur 6 einen Schnitt gemäß der Linie VI-VI in Figur 5, abgewickelt in die Ebene.

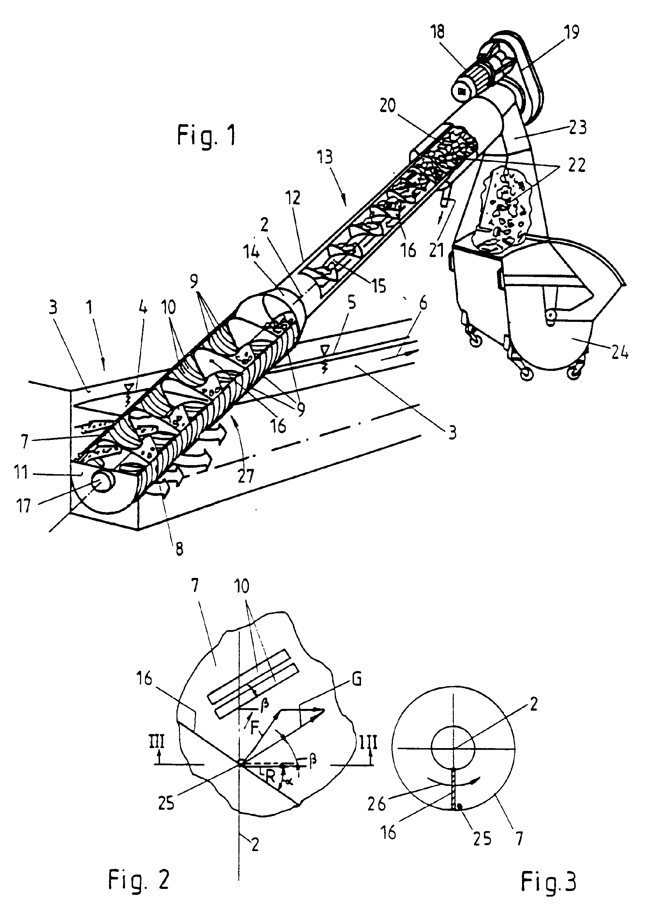

In einem in Figur 1 schematisch dargestellten Gerinne 1 ist die Vorrichtung mit ihrer Achse 2 schrägstehend so angeordnet, daß sie mit einem Teil an Seitenwandungen 3 des Gerinnes 1 anschließt, in welchem sich ein Wasserstand 4 vor der Vorrichtung und ein demgegenüber niederer Wasserstand 5 hinter der Vorrichtung befindet, so daß das Gerinne 1 in Richtung eines Pfeils 6 durchströmt wird.

Die Vorrichtung weist in ihrem unteren Teil einen Rost 7 auf, der sich mindestens über eine solche Höhe parallel zu der Achse 2 erstreckt, daß der untere, in den Wasserstand 4 eingreifende Teil sich immer im Wasser befindet und auch unterschiedlichen Wasserständen Rechnung getragen ist. Der Rost 7 erstreckt sich über einen Teil des Umfangs. Er weist eine Wandung 8 auf, die in der Regel aus einer gebogenen Platte aus Edelstahl besteht, die parallel zur Achse 2 auf der Mantellinie eines Zylinders angeordnet ist. Die Wandung 8 kann auch mehrfach unterteilt sein, so daß zylindrische Segmentflächen gebildet sind. In der Wandung 8 sind Durchtrittsspalte 10 gebildet, also Durchbrechungen, die von Scherleisten 9 begrenzt sind. Die Scherleisten 9 befinden sich am einen Ende der Haupterstreckungsrichtung der Durchtrittsspalte 10. Der Rost 7 kann an seinem unteren Ende ein Stirnblech 11 aufweisen, welches eine zusätzliche Abstützung für die den Rost 7 bildende Wandung darstellt.

Im Anschluß an den Rost 7 schräg nach oben ist ein Gehäuse 12 einer Scheckenfördereinrichtung 13 mit zylindrischer Mantelfläche vorgesehen. In dem Gehäuse, welches auch einen konischen Absatz 14 aufweisen kann, ist eine Welle 15 angeordnet, die mit einer Förderwendel 16 verbunden ist bzw. diese trägt. Die Förderwendel 16 erstreckt sich über die Gesamtlänge der Vorrichtung, sie ragt auch in den Teil der Vorrichtung hinein, in welchem der Rost 7 angeordnet ist. Dort ist gemäß Figur 1 keine Welle 15 vorgesehen bzw. angeordnet und die Förderwendel 16 besitzt dort einen größeren Durchmesser als weiter oben, der dem inneren Durchmesser der Wandung 8 angepaßt ist. Es ist aber auch möglich, die Welle 15 bis in den Bereich des Stirnblechs 11 hinein fortzuführen, so daß die Förderwendel 16 auf ihrer gesamten Längserstreckung von einer Welle 15 getragen ist. Das untere Ende der Förderwendel 16 kann mit einem Lager 17 im Bereich des Stirnblechs 11 gelagert sein. Am oberen Ende des Gehäuses ist ein weiteres, hier nicht dargestelltes Lager vorgesehen. Dort sind auch ein Motor 18 und ein Getriebe 19 angeordnet, über die die Welle 15 und damit auch die Förderwendel 16 angetrieben wird. Die Förderwendel 16 kann über ihre axiale Länge eine veränderliche Steigung aufweisen und, wie dargestellt, am oberen Ende der Förderstrecke eine Kompaktierzone 20 bilden, in deren Bereich die Förderwendel eine geringere Steigung aufweist. In diesem Bereich ist das Gehäuse 12 auch doppelwandig ausgebildet, wobei der innere Wandungsteil Durchbrechungen aufweist, damit beim Kompaktieren bzw. Zusammenpressen des Rechenguts abgeschiedene Flüssigkeiten über ein Rohr 21 zurück in das Gerinne 1 geleitet werden kann, während das kompaktierte Rechengut 22 über eine Schurre 23 in einen Behälter 24 abgeworfen wird.

Wie bereits aus Figur 1 erkennbar, sind die Durchtrittsspalte 10 mit ihrer Haupterstreckungsrichtung schräg zur Achse 2 angeordnet. Die Figuren 2 und 3 zeigen die Kraftverhältnisse und sind zusammenhängend zu betrachten. In Figur 2 ist die Achse 2 der Vorrichtung dargestellt und unterhalb der Achse in der Zeichenebene sieht man den Teil des Rosts 7, der sich in Figur 3 unten befindet, also im Bereich der Förderwendel 16. Es ist dort ein Splitkorn 25 dargestellt, welches von der Förderwendel 16 ergriffen und bei der Drehrichtung der Förderwendel 16 gemäß Pfeil 26 seitlich aufwärts am Rost 7 gefördert wird. In Figur 2 ist der Zustand dargestellt, der bei dem Durchlauf bzw. dem Einwirken der Förderwendel 16 auf das Splitkorn 25 an der untersten Mantellinie vorliegt. Die Förderwendel 16 muß hierbei einmal die Reibkraft überwinden, die der Rost 7 auf das Splitkorn 25 ausübt. Diese Reibkraft ist in gestrichelter Linienführung angegeben. Sie wirkt tangential am Umfang des zylinderförmigen Rosts 7. Die Förderwendel 16 muß also die umgekehrt gerichtete Kraft R aufbringen, um die tangential an dem Splitkorn 25 angreifende Reibkraft, die von dem Rost 7 aufgebracht wird, zu überwinden. Wenn die Förderwendel 16 parallel zur Achse 2 verliefe, wäre dies die einzige Kraft, die von ihr aufzubringen ist. Allerdings ist dann die Förderwirkung gleich Null. Demzufolge ist die Förderwendel 16 schräg zur Achse 2 angeordnet, und zwar in einem Winkel $\alpha$, der zwischen einer Ebene, die senkrecht auf dem Achse 2 steht und der Fläche der Förderwendel 15 aufgespannt wird. Neben der Kraft R muß die Förderwendel 16 auf das Splitkorn 25 eine Förderkraft F aufbringen. Diese Kraft F steht senkrecht auf der Fläche der Förderwendel 16. Aus den beiden Kräften R und F ergibt sich durch vektorielle Addition eine Gesamtkraft G, die als Resultierende betrachtet werden kann. Diese Resultierende verläuft in einem Winkel $\beta$ zu einer Ebene, die ebenfalls senkrecht auf der Achse 2 steht und durch den Kraftangriffspunkt an dem Splitkorn 25 geht. Der Winkel $\beta$ bestimmt somit die Wirkrichtung der von der Förderwendel 16 auf das Rechengut ausgeübten Gesamtkraft G. Dementsprechend sind auch die Durchtrittsspalte 10, von denen der Übersichtlichkeit halber nur zwei in Figur 2 dargestellt sind, schräg in diesem Winkel $\beta$ angeordnet. Hierbei kommt es auf die Haupterstreckungsrichtung der Durchtrittsspalte 10 an. Diese müssen sich längs, also parallel zu der Wirkrichtung der Gesamtkraft erstrecken, wobei es nicht so sehr darauf ankommt, diese Wirkrichtung exakt zu treffen. Es genügt vielmehr die Einhaltung eines gewissen Bereichs. Dies wird daraus verständlich, daß in Figur 2 die Verhältnisse an der untersten Mantellinie dargestellt sind und sich beim Weiterdrehen der Förderwendel 16 in dem seitlich ansteigenden Bereich die Verhältnisse ändern, weil die das Splitkorn 25 einwirkende Gewichtskraft eine Komponente enthält, die versucht, das Splitkorn 25 entgegen der Förderrichtung an der Wandung herabrollen zu lassen.

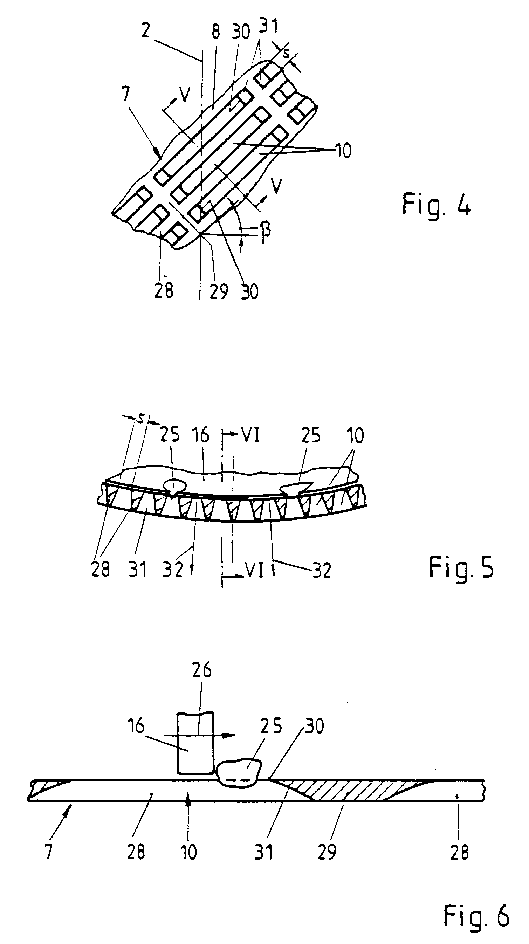

Figur 4 verdeutlicht nochmals die Ausbildung des Rosts 7. Es ist hier ein Blick auf die Außenfläche des Rosts 7 dargestellt, also etwa in Richtung des Pfeils 27 in Figur 1. Man erkennt, daß der Rost 7 aus einer durchgehenden Wandung 8 besteht, die von einzelnen, nicht zusammenhängenden, jedoch parallel zueinander angeordneten Durchtrittsspalten 10 gebildet ist, wobei die Längsseiten der Durchtrittsspalte 10 parallel zu der Richtung schräg gemäß dem Winkel $\beta$ verlaufen. Zwei benachbarte Durchtrittsspalte 10 werden von einer Rippe 28 getrennt. Quer zur Längserstreckung der Durchtrittsspalte 10 und zu den Rippen 28 erstrecken sich Scherleisten 29 aus dem Material der Wandung 8. Diese Scherleisten besitzen Schneidkanten 30 an beiden Enden der Längsspalte 10, wobei jedoch nur die eine Richtung wirksam ist. An die Schneidkanten 30 schließen sich Keilflächen 31 an, die herstellungsbedingt sind. Die Durchtrittsspalte 10 lassen sich mit einem Fräser aus der Wandung 8 ausfräsen, wobei sich die Keilflächen 31 durch die Materialdicke der Wandung 8 bilden. Es entstehen dabei gleichsam die Schneidkanten 30 ohne gesonderten Arbeitsgang.

Figur 5 zeigt einen Schnitt gemäß der Linie V-V in Figur 4. Man schaut in Förderrichtung der Förderwendel 16 und erkennt, daß sich die Durchtrittsspalte 10 senkrecht zur Zeichenebene erstrecken. Nach außen hin erweitert sich der Querschnitt in Durchtrittsrichtung für die Flüssigkeit gemäß Pfeil 32, so daß ein solches Splitkorn 25, welches die Spaltweite s unterschreitet, nach außen ungehindert durchtreten kann und somit keine Gefahr besteht, daß die Durchtrittsspalte 10 festgesetzt werden. Die Förderwendel 16 schiebt die Splitkörner 25 in Richtung des Winkels β, also in den Durchtrittsspalten 10 entlang, so daß insbesondere die Ränder der Rippen 28, die die Durchtrittsspalte 10 begrenzen, immer wieder gereinigt werden. Dieser Selbstreinigungseffekt ist wesentlich ausgeprägter als im Stand der Technik, weil die Förderrichtung der Splitkörner 25 mit der Erstreckungsrichtung der Durchtrittsspalte 10 in Längsrichtung übereinstimmt. In Figur 6 sind die Verhältnisse nochmals verdeutlicht, wobei hier die Darstellung einen Schnitt gemäß der Linie VI-VI in Figur 5, also in 90° zu der Darstellung gemäß Figur 5 zeigt. Zusätzlich ist der Rost 7 hier in die Ebene abgewickelt. Man erkennt, daß die Förderwendel 16, die sich gemäß Pfeil 26 bewegt, in dem Sinne auf das Splitkorn 25 einwirkt, daß dieses längs in dem Durchtrittsspalt 10 geschoben wird, bis es auf eine Schneidkante 30 der Scherleisten 29 auftrifft. Hier besteht jedoch schon die Neigung, daß infolge einer auf das Splitkorn 25 einwirkenden Gewichtskomponente ein Herausrollen oder Heraustreten aus der Durchtrittsspalte 10 begünstigt ist. Außerdem erstrecken sich die Schneidkanten 30 nur um die Spaltweite s quer zur Förderrichtung, so daß diese Schneidkanten 30 sehr stabil ausgebildet sind und nicht durchgedrückt oder abgerissen werden können, wie dies bei Roststäben der Fall ist, die beispielsweise axial, also parallel zur Achse 2 angeordnet sind.

## Patentansprüche

1. Vorrichtung zum Entfernen von Rechen- und/oder Siebgut aus in einem Gerinne (1) strömender Flüssigkeit mit einem in das Gerinne (1) reichenden, schräg aufwärts gerichteten, teilweise in die Flüssigkeit eintauchenden zylindermantelförmigen Rost (7) mit Durchtrittsspalten (10), und mit einer parallelen und mit Spiel zum Rost (7) angeordneten, als Schneckenfördereinrichtung (13) mit einem Gehäuse (12), einer Welle (15) und einer Förderwendel (16) ausgebildeten Förderstrecke für das Gut, so daß die Förderwendel (16) an dem Rost (7) entlangstreichend das Gut abnimmt und nach oben fördert, dadurch gekennzeichnet, daß die Durchtrittsspalte (10) mit ihrer Längsrichtung so schräg geneigt zur Achse (2) des zylindermantelförmigen Rosts (7) angeordnet sind, daß sie sich etwa parallel zur Wirkrichtung der von der Förderwendel (16) auf das Gut ausgeübten Gesamtkraft erstrecken.

2. Vorrichtung nach Anspruch 1, dadurch gekennzeichnet, daß die Durchtrittsspalte (10) an ihren in Wirkrichtung der Gesamtkraft weisenden Enden mit Scherleisten (9, 29) versehen sind, die Schneidkanten (30) aufweisen.

3. Vorrichtung nach Anspruch 1 oder 2, dadurch gekennzeichnet, daß die Durchtrittsspalte (10) in Wirkrichtung der Gesamtkraft eine Erstreckung (L) aufweisen, die etwa dem fünf- bis dreißigfachen der Spaltweite (s) entsprechen.

4. Vorrichtung nach Anspruch 1 bis 3, dadurch gekennzeichnet, daß die Durchtrittsspalte (10) einen sich in Durchtrittsrichtung erweiternden Querschnitt aufweisen.

5. Vorrichtung nach einem oder mehreren der Ansprüche 1 bis 4, dadurch gekennzeichnet, daß die Durchtrittsspalte (10) und die Scherleisten (9, 29) mit den Schneidkanten (30) durch Fräsen einer den Rost bildenden Platte, insbesondere einer ebenen und nach dem Fräsen zylindermantelförmig gebogenen Platte, hergestellt sind.

6. Vorrichtung nach Anspruch 5, dadurch gekennzeichnet, daß der den Rost (7) bildende Teil des Gehäuses auswechselbar angeordnet ist.

## Claims

1. Device for the removal of raked and/or screened material from a liquid flowing within a channel (1), having an obliquely upwardly directed, cylinder-jack-et-shaped grate (7) extending into the channel (1) and partially dipping into the liquid, which grate has penetration gaps (10) and a conveying track for the material, which track is disposed parallel to and with clearance from the grate (7) and is configured in the form of a worm conveyor mechanism (13) having a housing (12), a shaft (15) and a conveyor spiral (16), so that the conveyor spiral (16), in brushing along against the grate (7), removes the material and conveys it upwards, characterised in that the penetration gaps (10) are disposed with their longitudinal direction inclined obliquely with respect to the axis (2) of the cylinder-jacket-shaped grate (7) that they extend approximately parallel to the direction of action of the total force exerted by the conveyor spiral (16) upon the material.

2. Device according to Claim 1, characterised in that the penetration gaps (10) are provided at their ends pointing in the direction of action of the total force with shearing strips (9, 29), which exhibit cutting edges (30).

3. Device according to Claim 1 or 2, characterised in that the penetration gaps (10) exhibit, in the direction of action of the total force, an extent (L), which correspond [sic] to approximately five to thirty times the gap width (s).

4. Device according to Claims 1 to 3, characterised in that the penetration gaps (10) exhibit a cross-section extending in the direction of penetration.

5. Device according to one or more of Claims 1 to 4, characterised in that the penetration gaps (10) and the shearing strips (9, 29) having the cutting edges (30) are produced by milling a plate forming the grate, in particular a flat plate which has been bent, following the milling, in the shape of a cylinder jacket.

6. Device according to Claim 5, characterised in that the part of the housing forming the grate (7) is exchangeably disposed.

## Revendications

1. Dispositif pour extraire des déchets d'un liquide courant dans un égout (1) avec une grille (7) en forme d'enveloppe cylindrique s'étendant dans l'égout (1), dirigée obliquement vers le haut, plongeant partiellement dans le liquide, avec des fentes de passage (10), et avec une ligne de transport pour les déchets, disposée avec du jeu parallèlement à la grille (7) sous la forme d'un dispositif transporteur à vis (13) avec un boîtier (12), un arbre (15) et une vis transporteuse (16), de telle sorte que la vis transporteuse (16) enlève les déchets en frottant légèrement le long de la grille (7) et les entraîne vers le haut, **caractérisé** en ce que les fentes de passage (10) sont disposées avec leur sens longitudinal incliné par rapport à l'axe (2) de la grille (7), en forme d'enveloppe cylindrique, avec une obliquité telle qu'elles s'étendent à peu près parallèlement à la direction dans laquelle agit la force d'ensemble exercée par la vis transporteuse (16) sur les déchets.

2. Dispositif selon la revendication 1, caractérisé en ce que les fentes de passage (10) sont munies, sur leurs extrémités faisant face au sens d'action de la force d'ensemble, de barres de cisaillement (9, 29) qui présentent des arêtes coupantes (30).

3. Dispositif selon la revendication 1 ou 2, caractérisé en ce que les fentes de passage (10)présentent, dans le sens d'action de la force d'ensemble, une longueur (L) qui correspond à peu près à cinq à trente fois la largeur (s) de la fente.

4. Dispositif selon les revendications 1 à 3, caractérisé en ce que les fentes de passage (10) présentent une section qui va en s'élargissant dans le sens de passage.

5. Dispositif selon une ou plusieurs des revendications 1 à 4, caractérisé en ce que les fentes de passage (10) et les barres de cisaillement (9, 29) avec les arêtes coupantes (30) sont réalisées par fraisage d'une plaque constituant la grille, en particulier d'une plaque plane cintrée après le fraisage sous la forme d'une enveloppe cylindrique.

6. Dispositif selon la revendication 5, caractérisé en ce que la partie du boîtier constituant la grille (7) est agencée de manière interchangeable.

Fig. 1

Fig. 2

Fig. 3

EP 0 389 789 B1

Fig. 4

Fig. 5

Fig. 6